# EUROPÄISCHE PATENTSCHRIFT

(11) **EP 4 496 987 B1**
(45) Veröffentlichungstag und Bekanntmachung des Hinweises auf die Patenterteilung: **25.02.2026**
(21) Anmeldenummer: 23711681.9
(22) Anmeldetag: 13.03.2023
(51) Int. Cl.: G01F 23/22, G01F 23/24, G01F 23/26, G01F 23/263, G01F 23/2962

(54) **FÜLLSTANDMESSGERÄT**
FILL LEVEL GAUGE
APPAREIL DE MESURE DE NIVEAU DE REMPLISSAGE

(30) Priorität: 22.03.2022 DE 102022106671
(43) Veröffentlichungstag der Anmeldung: 29.01.2025
(73) Patentinhaber: Endress+Hauser SE+Co. KG, 79689 Maulburg (DE)
(72) Erfinder: STOLZ, Lars, 79591 Eimeldingen (DE); SCHMIDT, Robert, 79650 Schopfheim (DE); BECHTEL, Gerd, 79585 Steinen (DE)
(74) Vertreter: Endress + Hauser Group Services (Deutschland) AG+Co. KG
(86) Internationale Anmeldenummer: PCT/EP2023/056275
(87) Internationale Veröffentlichungsnummer: WO 2023/180109

(56) Entgegenhaltungen:
- EP-A2- 1 544 585
- EP-B1- 1 597 544
- EP-B1- 1 825 231
- EP-B1- 2 381 228
- DE-A1- 3 046 915
- US-A- 5 975 102
- US-A1- 2014 125 512
- US-B2- 10 072 960

## Beschreibung

Die Erfindung betrifft ein elektrisches Füllstandmessgerät, bei welchem eine Sonde in ein in einem Behältnis befindlichen Medium getaucht wird und über elektrische Eigenschaften ein Füllstand des Mediums abgeleitet wird. Ein gattungsgemäßes Messgerät beschreibt die DE 30 46 915 A1.

Solche Füllstandmessgeräte sind bekannt wie beispielsweise aus der Patentschrift EP 1 544 585 B1. Damit eine ausreichende Dichtheit solcher Füllstandmessgeräte erreicht wird, werden konisch geformte Dichtformteile eingesetzt, welche jedoch im Stand der Technik nur über komplizierte Vorrichtungen sicher platziert werden. Füllstandmessgeräte, die denjenigen der Druckschrift DE 30 46 915 A1 ähneln, offenbaren die EP 2 381 228 B1 oder die US 5,975,102 A. Sonden für Messgeräte, die über Dichtformteile verfügen, offenbaren die Druckschriften US 10,072,960 B2, EP 1 825 231 B1, EP 1 597 544 B1 oder US 2014/125512 A1.

Aufgabe der Erfindung ist es, ein Füllstandmessgerät mit einer einfachen und sicheren Vorrichtung zum Befestigen und Halten eines Dichtelements vorzuschlagen.

Die Aufgabe wird gelöst durch eine elektrische Baugruppe gemäß dem unabhängigen Anspruch 1, ein elektrisches Füllstandmessgerät gemäß dem unabhängigen Anspruch 7 sowie durch ein Verfahren gemäß dem unabhängigen Anspruch 10.

Eine erfindungsgemäße elektrische Baugruppe für ein elektrisches Füllstandsmessgerät zum Messen eines Füllstands eines Mediums in einem Behältnis umfasst:
- eine elektrisch leitfähige Sonde eingerichtet zum Leiten eines elektrischen Signals, wobei die Sonde dazu eingerichtet ist, in das Medium eingetaucht zu werden, wobei die Sonde in axialer Richtung einen Mittenbereich sowie zwei Endbereiche aufweist, wobei die Sonde im Mittenbereich eine Kunststoffbeschichtung aufweist;
- einen Prozessanschluss, welcher dazu eingerichtet ist, die Sonde radial zu lagern, wobei die Sonde abschnittweise über ein offenes Ende des Prozessanschlusses in ein Lumen des Prozessanschlusses hineinragt;

wobei die Sonde mittels einer rotationssymmetrischen, insbesondere ringförmigen oder schlauchförmigen, Dichtformteil radial gegenüber dem Prozessanschluss ist,
wobei das Dichtformteil mittels eines Schweissverfahrens, insbesondere mechanischen Reibschweißverfahrens wie beispielsweise Rotationsreibschweißen, rotatorisches Vibrationsschweißen oder Ultraschallschweißen mit der Kunststoffbeschichtung stoffschlüssig verbunden ist.

In einer Ausgestaltung ist die Sonde mittels des Dichtformteils radial gegenüber dem Prozessanschluss gelagert.

In einer Ausgestaltung weist das Dichtformteil einen Anschlag aufweist, welcher dazu eingerichtet ist, gegen einen Anschlag des Prozessanschlusses zu wirken.

In einer Ausgestaltung ist die Sonde in einem dem Medium abzuwendenden Endbereich durch eine zumindest in eine Rotationsrichtung rotatorisch fixierte Lagervorrichtung radial und/oder axial gelagert.

Eine axiale Lagerung kann zusätzlich oder alternativ über eine Federvorrichtung eingerichtet sein, welche beispielsweise gegen einen radialen Vorsprung oder Eingriff der Sonde wirkt.

In einer Ausgestaltung ist das Dichtformteil ein Thermoplast aufweist oder aus einem Thermoplast gefertigt.

In einer Ausgestaltung ist die Kunststoffbeschichtung auf einen elektrisch leitfähigen Sondenkern der Sonde per Extrusion aufgebracht ist.

Ein erfindungsgemäßes elektrisches Füllstandmessgerät zum Messen eines Füllstands eines Mediums in einem Behältnis umfasst
- eine elektrisch leitfähige Sonde eingerichtet zum Leiten eines elektrischen Signals, wobei die Sonde dazu eingerichtet ist, in das Medium eingetaucht zu werden, wobei die Sonde in axialer Richtung einen Mittenbereich sowie zwei Endbereiche aufweist, wobei die Sonde im Mittenbereich eine Kunststoffbeschichtung aufweist;
- eine elektronische Mess-/Betriebsschaltung eingerichtet zum Erzeugen und Auswerten von elektrischen Signalen sowie zum Bereitstellen von Füllstandmesswerten;
- ein Gehäuse, in welchem beispielsweise die elektronische Mess-/Betriebsschaltung angeordnet ist;
- einen am Gehäuse befestigten Prozessanschluss, welcher dazu eingerichtet ist, die Sonde radial zu lagern, wobei die Sonde abschnittweise über ein offenes Ende des Prozessanschlusses in ein Lumen des Prozessanschlusses hineinragt;

wobei die Sonde mittels einem insbesondere ringförmigen oder schlauchförmigen Dichtformteil radial gegenüber dem Prozessanschluss eingespannt ist,
wobei das Dichtformteil mittels eines Schweissverfahrens, insbesondere mechanischen Reibschweißverfahrens wie beispielsweise Rotationsreibschweißen, rotatorisches Vibrationsschweißen oder Ultraschallschweißen mit der Kunststoffbeschichtung stoffschlüssig verbunden ist.

In einer Ausgestaltung ist die elektronische Mess-/Betriebsschaltung dazu eingerichtet, den Füllstand des Mediums aus einem Messstrom, oder einer Messkapazität oder einer Signallaufzeit eines elektrischen Pulses abzuleiten.

In einer Ausgestaltung ist die elektronische Mess-/Betriebsschaltung mittels einer elektrisch leitfähigen Klemmvorrichtung mit einem dem Gehäuse zugewandten Endbereich der Sonde verbunden.

Bei einem erfindungsgemäßen Verfahren zum Herstellen eines erfindungsgemäßen Füllstandmessgeräts,
wobei eine Sonde in axialer Richtung einen Mittenbereich mit einer Kunststoffbeschichtung aufweist,
wobei in einem ersten Verfahrensschritt ein rotationssymmetrisches, beispielsweise ringförmiges oder schlauchförmiges Dichtformteil über ein Ende der Sonde zum Mittenbereich geführt wird, wobei Dichtformteil und Kunststoffbeschichtung eine Presspassung miteinander eingehen,
wobei in einem zweiten Verfahrensschritt eine Relativbewegung wie beispielsweise eine Rotationsbewegung zwischen Dichtformteil und Sonde eingerichtet wird, wobei Dichtformteil und Kunststoffbeschichtung durch Reibung abschnittsweise stoffschlüssig miteinander verbunden werden.

Im Folgenden wird die Erfindung anhand von Ausführungsbeispielen beschrieben.
Fig. 1 skizziert zwei beispielhafte erfindungsgemäße Füllstandmessgeräte;
Fig. 2 skizziert eine beispielhafte erfindungsgemäße elektrische Baugruppe mit einer Lagervorrichtung der Sonde.
Fig. 3 skizziert eine beispielhafte Anwendung eines erfindungsgemäßen Füllstandmessgeräts;
Fig. 4 skizziert ein beispielhaftes Verfahren zur Herstellung eines Füllstandmessgeräts.

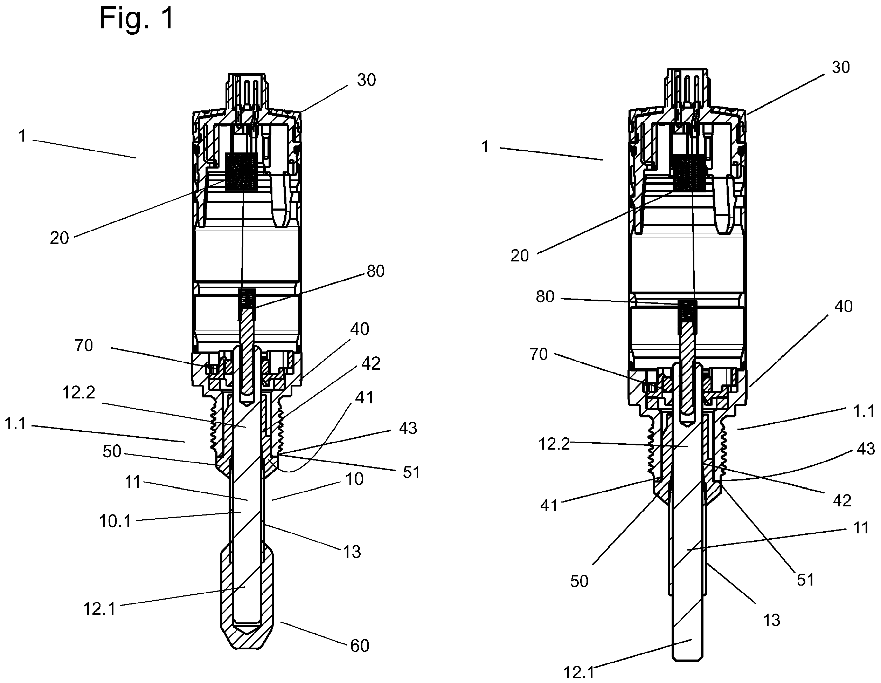

Fig.1 zeigt zwei Längsschnitte durch beispielhafte erfindungsgemäße Füllstandmessgeräte 1 mit einem Gehäuse 30, einer im Gehäuse angeordneten elektronischen Mess-/Betriebsschaltung 20, und einer beispielhaften erfindungsgemäßen Baugruppe 1.1 mit einer elektrisch leitfähigen Sonde 10 und mit einem Prozessanschluss 40. Alternativ kann die elektronische Mess-/Betriebsschaltung auch außerhalb des Gehäuses angeordnet sein, welche mittels einer Schnittstelle elektrisch an die Sonde angebunden ist. Die elektronische Mess-/Betriebsschaltung ist eingerichtet zum Erzeugen und Auswerten von elektrischen Signalen sowie zum Bereitstellen von Füllstandmesswerten.

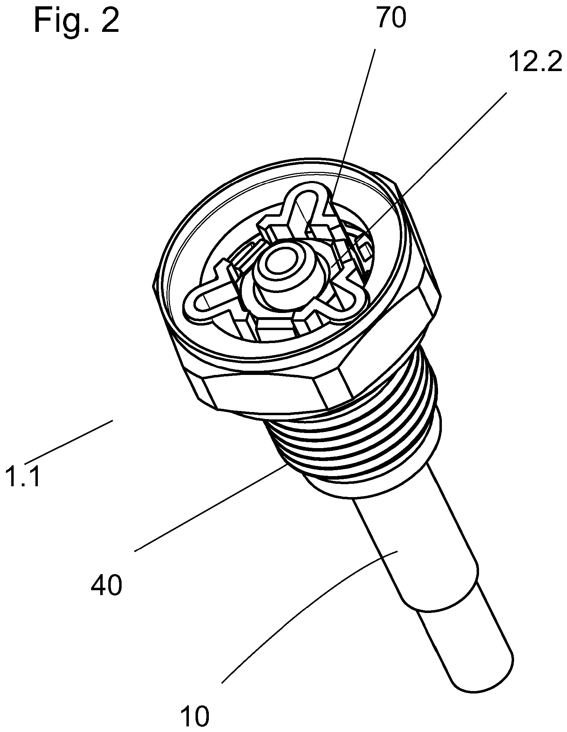

Der Prozessanschluss ist am Gehäuse befestigt und dazu eingerichtet, die Sonde 10 radial einzuspannen oder zu lagern. Die Sonde kann über den Prozessanschluss auch axial und/oder in zumindest einer Rotationsrichtung rotatorisch gelagert sein. Ein weiterer radialer Lagerpunkt ist wie hier gezeigt durch die Lagervorrichtung 70 eingerichtet, siehe dazu auch Fig. 2. Die Sonde ragt über ein offenes Ende 41 des Prozessanschlusses in ein Lumen 42 des Prozessanschlusses hinein, der Prozessanschluss ist gegenüber einem Medium mittels einem Dichtformteil 50 abgedichtet.

Erfindungsgemäß weist die Sonde eine Kunststoffbeschichtung 13 auf, welche in einem Mittenbereich 11 auf einen elektrisch leitfähigen Sondenkern 10.1 aufgebracht ist. Weiterhin erfindungsgemäß sind Dichtformteil 50 und Kunststoffverbindung 13 mittels eines mechanischen Reibschweißverfahrens wie beispielsweise Rotationsreibschweißen, rotatorisches Vibrationsschweißen oder Ultraschallschweißen mit der Kunststoffbeschichtung stoffschlüssig verbunden.

Das Dichtformteil 50 weist dabei einen Anschlag 51 auf, welcher gegen einen Anschlag 43 des Prozessanschlusses wirkt.

Im Falle eines kapazitiven Füllstandmessgeräts wie auf der linken Seite gezeigt kann das Füllstandmessgerät wie hier dargestellt an einem dem Gehäuse abgewandten Ende 12.1 einen elektrischen Isolator 60 aufweisen, der das Medium von der Sonde elektrisch isoliert. Im Falle eines konduktiven Füllstandsmessgeräts wie auf der rechten Seite gezeigt, bleibt das vom Gehäuse abgewandte Ende 12.1 frei von einem elektrisch isolierenden Material, so dass es in elektrischen Kontakt mit dem Medium treten kann.

Die elektronische Mess-/Betriebsschaltung kann wie hier gezeigt mittels einer elektrisch leitfähigen Klemmvorrichtung mit einem dem Gehäuse zugewandten Endbereich der Sonde verbunden sein.

Fig. 2 zeigt eine beispielhafte Ausgestaltung einer Lagerung der Sonde 10, wobei im Prozessanschluss 40 eine Lagervorrichtung 70 vorgesehen ist, welche die Sonde an einem dem Gehäuse zugewandten Ende der Sonde 12.2 radial und/oder axial lagert. Die Lagervorrichtung selbst ist im Prozessanschluss zumindest in eine Rotationsrichtung rotationsfixiert befestigt, kann wie hier gezeigt aber auch in beide Rotationsrichtungen rotationsfixiert befestigt sein. Eine axiale Lagerung der Sonde kann zusätzlich oder alternativ über eine Federvorrichtung eingerichtet sein, welche beispielsweise gegen einen radialen Vorsprung oder Eingriff der Sonde wirkt.

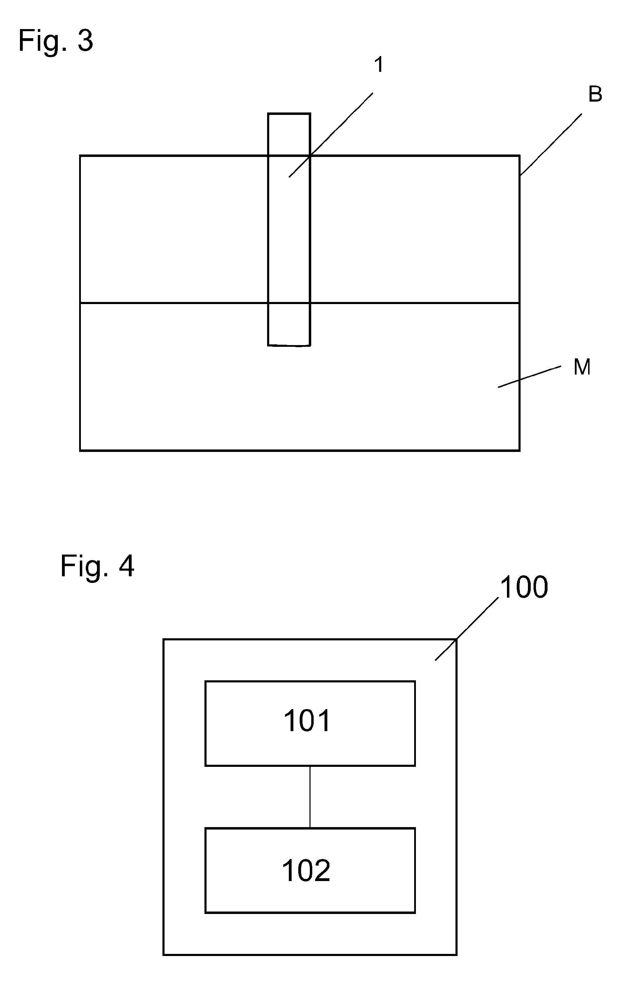

Fig. 3 skizziert eine Anwendung eines beispielhaften Füllstandmessgeräts 1, welches an einem Behältnis B befestigt ist und in ein Lumen des Behältnisses hineinragt, so dass es abschnittsweise in ein im Behältnis befindlichen Medium hineintaucht. Beispielsweise durch Leitfähigkeits- oder Kapazitätsmessungen kann dann der Füllstand des Mediums bestimmt werden.

Fig. 4 skizziert ein Verfahren 100 zum Herstellen eines erfindungsgemäßen Füllstandmessgerät,
wobei eine Sonde 10 in axialer Richtung einen Mittenbereich 11 mit einer Kunststoffbeschichtung 13 versehen ist,
wobei in einem ersten Verfahrensschritt 101 ein rotationssymmetrisches, beispielsweise ringförmiges oder schlauchförmiges Dichtformteil 50 über ein Ende der Sonde zum Mittenbereich geführt wird, wobei Dichtformteil und Kunststoffbeschichtung eine Presspassung miteinander eingehen,
wobei in einem zweiten Verfahrensschritt 102 eine Relativbewegung wie beispielsweise eine Rotationsbewegung zwischen Dichtformteil und Sonde eingerichtet wird, wobei Dichtformteil und Kunststoffbeschichtung durch Reibung abschnittsweise stoffschlüssig miteinander verbunden werden.

### Bezugszeichenliste

- 1: Füllstandsmessgerät
- 10: Sonde
- 10.1: Sondenkern
- 11: Mittenbereich
- 12: Endbereich
- 12.1: vom Gehäuse abgewandtes Ende
- 12.2: dem Gehäuse zugewandtes Ende
- 13: Kunststoffbeschichtung
- 20: elektronische Mess-/Betriebsschaltung
- 30: Gehäuse
- 40: Prozessanschluss
- 41: offenes Ende
- 42: Lumen
- 43: Anschlag
- 50: Dichtformteil
- 51: Anschlag
- 60: elektrische Isolierung
- 70: Lagervorrichtung
- 80: elektrisch leitfähige Klemmvorrichtung
- 100: Verfahren
- 101: erster Verfahrensschritt
- 102: zweiter Verfahrensschritt
- B: Behältnis
- M: Medium

## Patentansprüche

1. Elektrische Baugruppe (1.1) für ein elektrisches Füllstandsmessgerät (1) zum Messen eines Füllstands eines Mediums (M) in einem Behältnis (B) umfassend:
- eine elektrisch leitfähige Sonde (10) eingerichtet zum Leiten eines elektrischen Signals, wobei die Sonde (10) dazu eingerichtet ist, in das Medium (M) eingetaucht zu werden, wobei die Sonde (10) in axialer Richtung einen Mittenbereich (11) sowie zwei Endbereiche (12) aufweist, und wobei die Sonde (10) im Mittenbereich eine Kunststoffbeschichtung (13) aufweist;
- einen Prozessanschluss (40), welcher dazu eingerichtet ist, die Sonde (10) radial zu lagern, wobei die Sonde (10) abschnittweise über ein offenes Ende (41) des Prozessanschlusses (40) in ein Lumen (42) des Prozessanschlusses (40) hineinragt; und
- ein rotationssymmetrisches Dichtformteil (50), welches mittels eines Schweissverfahrens mit der Kunststoffbeschichtung (13) stoffschlüssig verbunden ist,
**dadurch gekennzeichnet, dass**
die Sonde (10) mittels des Dichtformteils (50) radial gegenüber dem Prozessanschluss (40) angeordnet ist.

2. Elektrische Baugruppe (1.1) nach Anspruch 1,
wobei die Sonde (10) mittels des Dichtformteils (50) radial gegenüber dem Prozessanschluss (40) gelagert ist.

3. Elektrische Baugruppe (1.1) nach Anspruch 1 oder 2,
wobei das Dichtformteil (50) einen Anschlag (51) aufweist, welcher dazu eingerichtet ist, gegen einen Anschlag (43) des Prozessanschlusses (40) zu wirken.

4. Elektrische Baugruppe (1.1) nach einem der Ansprüche 1 bis 3,
wobei die Sonde (10) in einem dem Medium (M) abzuwendenden Endbereich (12.2) durch eine zumindest in eine Rotationsrichtung rotatorisch fixierte Lagervorrichtung (70) radial und/oder axial gelagert ist.

5. Elektrische Baugruppe (1.1) nach einem der Ansprüche 1 bis 4,
wobei das Dichtformteil (50) ein Thermoplast aufweist oder aus Thermoplast gefertigt ist.

6. Elektrische Baugruppe (1.1) nach einem der Ansprüche 1 bis 5,
wobei die Kunststoffbeschichtung (13) auf einen elektrisch leitfähigen Sondenkern (10.1) der Sonde (10) per Extrusion aufgebracht ist.

7. Elektrisches Füllstandmessgerät (1) zum Messen eines Füllstands eines Mediums (M) in einem Behältnis (B) umfassend:
- eine elektrische Baugruppe (1.1) gemäß einem der Ansprüche 1 bis 6,
- eine elektronische Mess-/Betriebsschaltung (20) eingerichtet zum Erzeugen und Auswerten von elektrischen Signalen sowie zum Bereitstellen von Füllstandmesswerten;
- ein Gehäuse (30), in welchem die elektronische Mess-/Betriebsschaltung (20) oder ein Anschluss für die elektronische Mess-/Betriebsschaltung (1.1) angeordnet ist.

8. Füllstandmessgerät (1) nach Anspruch 7,
wobei die elektronische Mess-/Betriebsschaltung (20) dazu eingerichtet ist, den Füllstand des Mediums (M) aus einem Messstrom oder aus einer Messkapazität oder aus einer Signallaufzeit eines elektrischen Pulses abzuleiten.

9. Füllstandmessgerät (1) nach Anspruch 7 oder 8,
wobei die elektronische Mess-/Betriebsschaltung (20) mittels einer elektrisch leitfähigen Klemmvorrichtung (80) mit einem dem Gehäuse (30) zugewandten Endbereich (12.2) der Sonde (10) verbunden ist.

10. Verfahren (100) zum Herstellen eines Füllstandmessgerät (1) nach einem der Ansprüche 7 bis 9,
wobei eine Sonde (10) in axialer Richtung einen Mittenbereich (11) mit einer Kunststoffbeschichtung (13) aufweist,
wobei in einem ersten Verfahrensschritt (101) ein rotationssymmetrisches Dichtformteil (50) über ein Ende der Sonde (10) zum Mittenbereich (11) geführt wird, wobei das Dichtformteil (50) und die Kunststoffbeschichtung (13) eine Presspassung miteinander eingehen, und
wobei in einem zweiten Verfahrensschritt (102) eine Relativbewegung zwischen dem Dichtformteil (50) und der Sonde (10) eingerichtet wird, wobei das Dichtformteil (50) und die Kunststoffbeschichtung (13) durch Reibung abschnittsweise stoffschlüssig miteinander verbunden werden.

## Claims

1. An electrical assembly (1.1) for an electrical fill level measuring device (1) for measuring a fill level of a medium (M) in a container (B), comprising:
- An electrically conductive probe (10) configured to conduct an electrical signal, wherein the probe (10) is designed to be immersed in the medium (M), wherein the probe (10) has a center area (11) and two end areas (12) in the axial direction, and wherein the probe (10) has a plastic coating (13) in the center area;
- a process connection (40) which is configured to radially mount the probe (10), wherein sections of the probe (10) protrude beyond an open end (41) of the process connection (40) into a lumen (42) of the process connection (40); and
- a rotationally symmetrical molded sealing part (50) which has a permanent material bond with the plastic coating (13) through a welding process,
**characterized in that**
the probe (10) is arranged radially opposite the process connection (40) using the molded sealing part (50).

2. The electrical assembly (1.1) as claimed in claim 1,
wherein the probe (10) is mounted radially opposite the process connection (40) using the molded sealing part (50).

3. The electrical assembly (1.1) as claimed in claim 1 or 2,
wherein the molded sealing part (50) has a limit stop (51) which is configured to act against a limit stop (43) of the process connection (40).

4. The electrical assembly (1.1) as claimed in one of claims 1 to 3,
wherein the probe (10) is radially and/or axially mounted in an end area (12.2) facing away from the medium (M) using a mounting device (70) which is rotationally fixed at least in one direction of rotation.

5. The electrical assembly (1.1) as claimed in one of claims 1 to 4,
wherein the molded sealing part (50) has a thermoplastic or is made from thermoplastic.

6. The electrical assembly (1.1) as claimed in one of claims 1 to 5,
wherein the plastic coating (13) is applied to an electrically conductive probe core (10.1) of the probe (10) by means of extrusion.

7. An electrical fill level measuring device (1) for measuring a fill level of a medium (M) in a container (B), comprising:
- An electrical assembly (1.1) as claimed in one of claims 1 to 6,
- an electronic measuring/operating circuit (20) configured to generate and analyze electrical signals and to provide values related to the fill level;
- a housing (30) in which the electronic measuring/operating circuit (20) or a connection for the electronic measuring/operating circuit (1.1) is arranged.

8. The fill level measuring device (1) as claimed in claim 7,
wherein the electronic measuring/operating circuit (20) is configured to deduce the fill level of the medium (M) from a measurement current or from a measurement capacity or from a signal duration of an electrical pulse.

9. The fill level measuring device (1) as claimed in claim 7 or 8,
wherein the electronic measuring/operating circuit (20) is connected to an end area (12.2) of the probe (10) facing toward the housing (30) by means of an electrically conductive clamping device (80).

10. A method (100) for producing a fill level measuring device (1) as claimed in one of claims 7 to 9,
wherein a probe (10) has a center section (11) with a plastic coating (13) in the axial direction,
wherein in a first process step (101), a rotationally symmetrical molded sealing part (50) is guided over an end of the probe (10) to the center area (11),
wherein the molded sealing part (50) and the plastic coating (13) create a press fit with each other, and
wherein in a second process step (102), a relative movement is initiated between the molded sealing part (50) and the probe (10), wherein a permanent material bond is formed between sections of the molded sealing part (50) and the plastic coating (13) through friction.

## Revendications

1. Sous-groupe électrique (1.1) pour un transmetteur de niveau électrique (1) destiné à la mesure d'un niveau d'un produit (M) dans un réservoir (B), lequel sous-groupe comprend :
- une sonde électriquement conductrice (10) conçue pour conduire un signal électrique, la sonde (10) étant conçue pour être immergée dans le produit (M), la sonde (10) présentant, dans la direction axiale, une zone centrale (11) et deux zones d'extrémité (12), et la sonde (10) comportant un revêtement en matière plastique (13) dans la zone centrale ;
- un raccord process (40), lequel est conçu pour supporter la sonde (10) radialement, la sonde (10) s'étendant par sections dans un canal intérieur (42) du raccord process (40) via une extrémité ouverte (41) du raccord process (40) ; et
- une pièce moulée d'étanchéité à symétrie de révolution (50), laquelle est reliée par adhérence de matière au revêtement en matière plastique (13) au moyen d'un procédé de soudage,
**caractérisé en ce que**
la sonde (10) est disposée radialement par rapport au raccord process (40) au moyen de la pièce moulée d'étanchéité (50).

2. Sous-groupe électrique (1.1) selon la revendication 1,
pour lequel la sonde (10) est montée radialement par rapport au raccord process (40) au moyen de la pièce moulée d'étanchéité (50).

3. Sous-groupe électrique (1.1) selon la revendication 1 ou 2,
pour lequel la pièce moulée d'étanchéité (50) comporte une butée (51), laquelle est conçue pour agir contre une butée (43) du raccord process (40).

4. Sous-groupe électrique (1.1) selon l'une des revendications 1 à 3,
pour lequel la sonde (10) est montée radialement et/ou axialement - dans une zone d'extrémité (12.2) se trouvant du côté opposé au produit (M) - au moyen d'un un dispositif de palier (70) fixé en rotation au moins dans un sens de rotation.

5. Sous-groupe électrique (1.1) selon l'une revendications 1 à 4,
pour lequel la pièce moulée d'étanchéité (50) comporte un thermoplastique ou est fabriquée à partir d'un thermoplastique.

6. Sous-groupe électrique (1.1) selon l'une des revendications 1 à 5,
pour lequel le revêtement en matière plastique (13) est appliqué par extrusion sur un noyau de sonde électriquement conducteur (10.1) de la sonde (10).

7. Transmetteur de niveau électrique (1) destiné à la mesure d'un niveau d'un produit (M) dans un réservoir (B), lequel transmetteur comprend :
- un sous-groupe électrique (1.1) selon l'une des revendications 1 à 6,
- un circuit électronique de mesure/fonctionnement (20) conçu pour générer et évaluer des signaux électriques et pour fournir des valeurs mesurées de niveau ;
- un boîtier (30), dans lequel est disposé le circuit électronique de mesure/fonctionnement (20) ou un raccordement pour le circuit électronique de mesure/fonctionnement (1.1).

8. Transmetteur de niveau (1) selon la revendication 7,
pour lequel le circuit électronique de mesure/fonctionnement (20) est conçu pour déduire le niveau du produit (M) à partir d'un courant de mesure, d'une capacité de mesure ou d'un temps de propagation d'une impulsion électrique.

9. Transmetteur de niveau (1) selon la revendication 7 ou 8,
pour lequel le circuit électronique de mesure/fonctionnement (20) est relié à une zone d'extrémité (12.2) de la sonde (10) tournée vers le boîtier (30) au moyen d'un dispositif de serrage électriquement conducteur (80).

10. Procédé (100) destiné à la fabrication d'un transmetteur de niveau (1) selon l'une des revendications 7 à 9,
procédé pour lequel une sonde (10) présente, dans la direction axiale, une zone centrale (11) avec un revêtement en matière plastique (13),
procédé pour lequel, dans une première étape de procédé (101), une pièce moulée d'étanchéité à symétrie de révolution (50) est guidée par une extrémité de la sonde (10) vers la zone centrale (11), la pièce moulée d'étanchéité (50) et le revêtement en matière plastique (13) s'emboîtant par pression, et
procédé pour lequel, dans une deuxième étape de procédé (102), un mouvement relatif est établi entre la pièce moulée d'étanchéité (50) et la sonde (10), la pièce moulée d'étanchéité (50) et le revêtement en matière plastique (13) étant reliés partiellement entre eux par adhérence (friction).
